# EUROPEAN PATENT SPECIFICATION

(11) **EP 4 409 696 B1**
(45) Date of publication and mention of the grant of the patent: **14.10.2026**
(21) Application number: 22822548.8
(22) Date of filing: 29.11.2022
(51) Int. Cl.: H01R 13/514, H02M 1/00, H02B 1/00, H02G 5/00

(54) **POWER CONNECTION MODULE**
STROMANSCHLUSSMODUL
MODULE DE CONNEXION ÉLECTRIQUE

(30) Priority: 30.11.2021 EP 21211317
(43) Date of publication of application: 07.08.2024
(73) Proprietor: Siemens Gamesa Renewable Energy A/S, 7330 Brande (DK)
(72) Inventor: RASMUSSEN, Brian, 7323 Give (DK); ESEN, Cagribey, 8240 Risskov (DK)
(74) Representative: SGRE-Association
(86) International application number: PCT/EP2022/083705
(87) International publication number: WO 2023/099491

(56) References cited:
- DE-A1- 102018 000 158
- JP-B2- 5 340 380
- US-A1- 2013 225 005

## Description

### FIELD OF THE INVENTION

The present invention relates to a power component connection module.

### BACKGROUND

The power connection between main power components of a wind turbine, e.g. transformer, converter, generator, etc.; requires long heavy electric conductors i.e. cables or busbars, to be connected, i.e. bolted, at a first power component in a predetermined connection point; then transported by an operator to a second power component where the conductor is secured in a predetermined connection point. The assembling procedure is very time consuming and complex, as it shall be repeated for a large number of conductors or conductor ends. Besides, the length of the conductors may be about 10 m long, or even more in some examples, which further complicates the assembling process.

In addition, a misplacement of cables may lead to underperformance, overload of certain cables, an increase of uneven electromagnetic fields or even to a fire which may damage or destroy the wind turbine and/or cause serious injuries to operators.

In conclusion, there is a need to provide a solution which reduces the assembling time and complexity of power component connection while increasing the safety at reasonable cost.

Document DE 10 2018 000158 A1 describes an arrangement connecting components of a wind turbine with an output connection. This is performed by using permanently installed busbars each corresponding to a different phase. The different busbars are grouped together to form a group. In order to avoid asymmetries between the groups, the phase of the busbars of one group are changed cyclically in comparison to the busbars of the adjacently installed group.

Document US 2013/02250005 A1 describes a system to couple the output of a photovoltaic cell to the common grid. The connection is realized by using a load center that is connected to the photovoltaic cells via a three phase branch circuit. The connecting cable features four wires corresponding to three lines carrying different phases of AC current and a neutral line. The phases of the respective wires are changed cyclically each time the cable is connected to a splice box comprising a phase rotation circuit.

### SUMMARY OF THE INVENTION

In a first aspect, a power connection module is provided. The power connection module comprises a first and a second submodules, an intermediary submodule and a plurality of conductors arranged at the intermediary submodule. Each first and second submodules comprise a plurality of internal connection points and a plurality of external connection points, wherein the connection points are arranged according to a predefined standard scheme. The plurality of external connection points enable the connection between the power connection module and the two separate components

. The intermediary submodule is arranged between the first and second submodules and comprises a central portion. The plurality of conductors are arranged at the intermediary submodule, couple the internal connection points of the first submodule to the internal connection points of the second submodule and are grouped in at least a first phase group and a second phase group, wherein the electric phase to be conducted by the conductors in the first phase group is different from the electric phase to be conducted by the conductors of the second phase group. In substantially all central portion of the intermediary submodule, the plurality of conductors form a predetermined matrix cross-section different from the predefined standard scheme, such predetermined matrix cross-section comprises rows and columns. The conductors arranged in adjacent rows and/or columns of such matrix cross-section belong to a different phase group.

By using a predetermined matrix cross-section avoids having same electric phase conductors in adjacent rows and/or columns thereby preventing electrical problems such as uneven current sharing in the intermediary submodule, and in addition the connection module is capable of using full capacity of the cables.

The use of separate (independent) submodules enhances the scalability of the connection module. By having an intermediary submodule enables adapting the length of the connection module to a specific situation, i.e. to a the connection (distance) of two wind turbine components, without modifying the first and second submodules. That is, more than one intermediary submodule may be used to adapt to the distance between the two turbine components to be interconnected without requiring. Thus, due to the modularity of the connection module, the manufacturing costs may be kept low as the basic submodules (first, second and intermediary submodules) may adapt to achieve different connections e.g. to different components of a wind turbine or to the configuration of different wind turbine models.

Moreover, using different submodules enables the connection module to be a preassembled unit, therefore the complexity of a connection process between two power component such as a generator and a converter in a wind turbine may be reduced. A premade or preassembled unit may further reduce costs as its manufacturing process may be outsourced to a supplier.

By using a connection module as claimed, operators do not deal with a plurality of individual conductors but use a module which contributes to a better connection quality as the risk of misplacement is reduced.

In addition, the use of connection module as claimed reduces the time required in the connection process.

In an example, the matrix cross-section may comprise a base pattern.

In an example, the base pattern may be shifted by one row in adjacent columns of the matrix cross-section thereby further reducing the probability of having electric problems in conductors.

In an example, the module may further comprise a housing which may be made of a conducting material or may be made of a non-conducting material and comprise a conducting mesh. By having a conducting element, Electromagnetic Compatibility (EMC) and grounding advantages may be provided.

In an example, the module may further comprise an interconnection element configured to enable an angled connection between the plurality of conductors and a power component, which further facilitates the connection process and enhances the adaptability of the connection module.

In an example, the interconnection element may comprise a plurality of coupling holes.

In a further aspect, a power connection system is provided. The power connection system may comprise at least two power connection modules according to any of the examples disclosed coupled therebetween. The flexibility and scalability of the system may be improved as any required number of modules may be coupled together.

In a further aspect, a wind turbine comprising a power connection module according to any of the examples disclosed is provided.

### BRIEF DESCRIPTION OF THE FIGURES

The forgoing and other features and advantages of the invention will become further apparent from the following detailed description read in conjunction with the accompanying drawings. In the drawings, like reference numerals refer to like elements.
Figure 1 schematically illustrates a power connection device according to an example;
Figure 2A schematically illustrates an interconnection element according to an example;
Figure 2B schematically illustrates part of a power connection module comprising a plurality of interconnection elements according to an example;
Figure 3 schematically illustrates a power connection device according to an example;
Figures 4A and 4B schematically illustrate an internal connection points of a submodule according to an example;
Figure 5A schematically illustrates a conductor matrix pattern at an intermediary submodule according to an example; and
Figure 5B schematically illustrates a part of a basic pattern and a repetition pattern according to an example.

### DETAILED DESCRIPTION

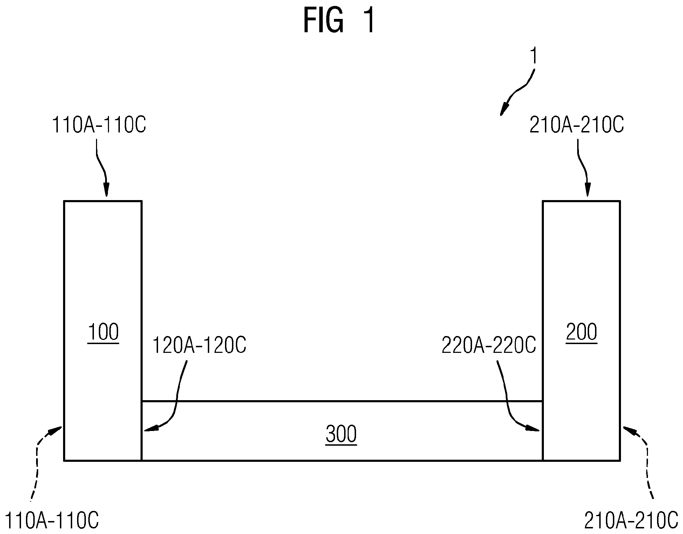

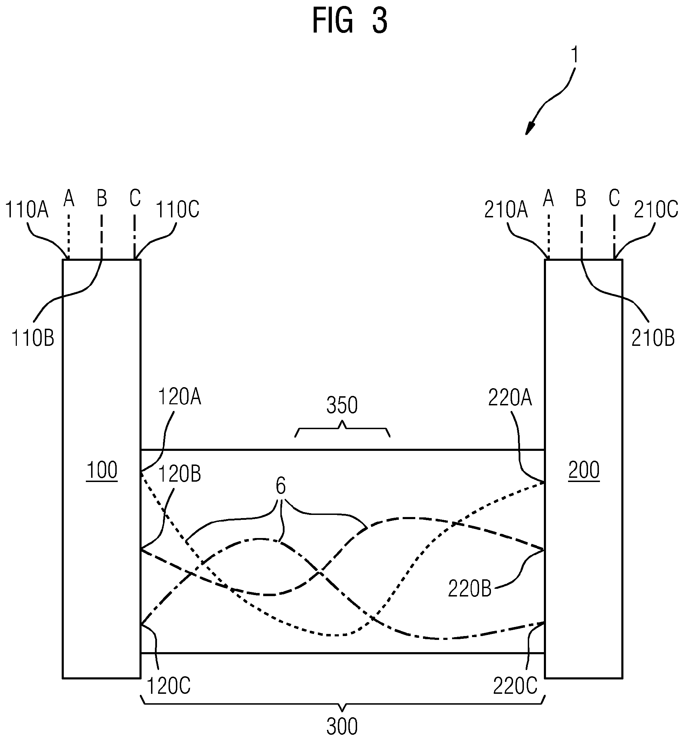

Figure 1 depicts a power connection module 1 for electrically coupling together two power components e.g. a generator and a converter, of a wind turbine. The module 1 may comprise a first and second terminal submodules 100, 200 and an intermediary submodule 300 comprising a plurality of conductors 6 (see Figure 3) arranged therein.

The first and second (terminal) submodules 100, 200 may comprise a plurality of internal connection points 120A-120C, 220A-220C and a plurality of external connection points 110A-110C, 210A-210C. The external connection points may be arranged at any point of the submodules 100, 200. In an example, the internal connection points 120A-120C, 220A-220C and the external connection points 110A - 110C, 210A - 210C may form a straight connection. In an example, the internal connection points 120A-120C, 220A-220C and the external connection points 110A - 110C, 210A - 210C may form an angled (e.g. 90 degree or any other angle) connection.

The connection points may comprise securing holes to enable coupling the conductors thereto e.g. by bolts or in any other suitable way.

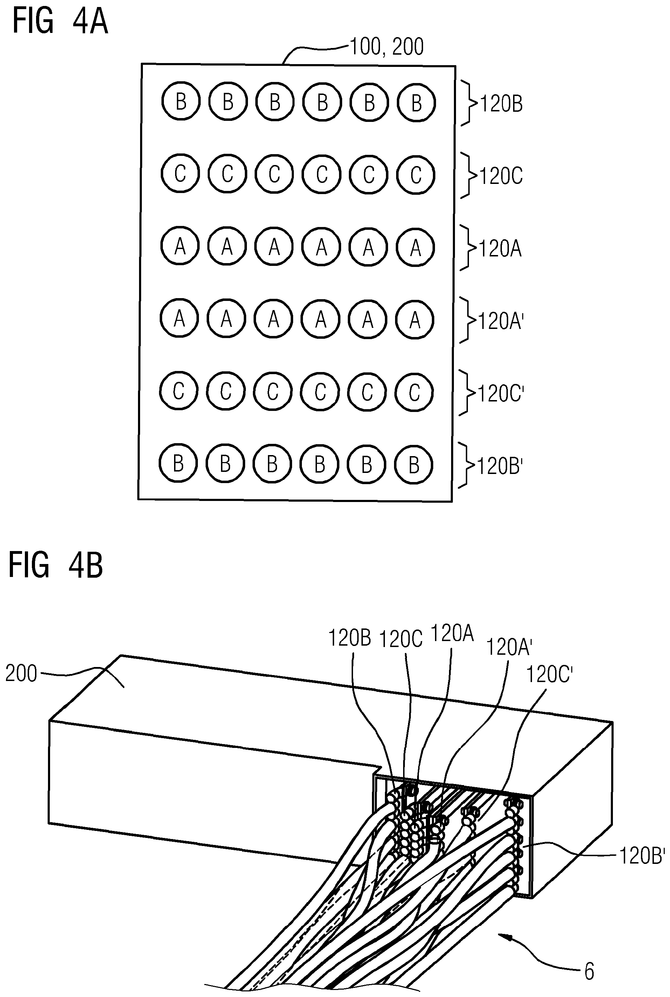

The connection points are arranged according to a predefined standard scheme for properly matching the connections of an external device e.g. another module or a power component such as a converter. In an example, the plurality of connection points may be parallel and may be gathered according to a respective electric phase. That is, conductors sharing or configured to conduct or carry the same electric phase may be arranged in parallel (see figure 4A) i.e. adjacent to one another in a same row.

The internal and/or external connection scheme or arrangement may be equal or different in the first submodule 100 and in the second submodule 200.

The connection points may be individual orifices, e.g. male-female connector; or may also be busbars wherein a plurality of conductors of a same phase may be connected.

The first submodule 100 may be an elongated or L-shaped body which may comprise an angled connection between external connection points 110A - 110C and internal connection points 120A - 120C.

The second submodule 200 may be an elongated or L-shaped body that may comprise an angled connection between external connection points 210A - 210C and internal connection points 220A - 220C.

The connection module 1 or each first, second and intermediary submodules may further comprise a housing. The housing may be made of conducting material e.g. metal or metal alloy. In other examples, the housing may be made of non-conducting material, e.g. plastic, and may further comprise a conducting material mesh. In examples wherein each first, second and intermediary submodules comprise a housing, the housings may comprise coupling elements to assemble the submodules together.

The housing may comprise handles (not shown) to facilitate the transport of the connection module and the connection process, i.e. connection to external device such as the generator of a wind turbine.

The housing may comprise a plurality of holes (not shown) configured to match with the external connection points of first and second terminal submodules thereby enabling the connection between the power connection device and an external component, e.g. to a converter.

The connection module 1 may be a premade or preassembled unit which further reduces the complexity of the connection process and enable a cost reduction.

In some examples, the connection module 1 may further comprise an interconnection element 500 (at least one per phase) to enable an angled connection, i.e. different from straight or 0 degrees, between the module 1 and an external component e.g. a converter.

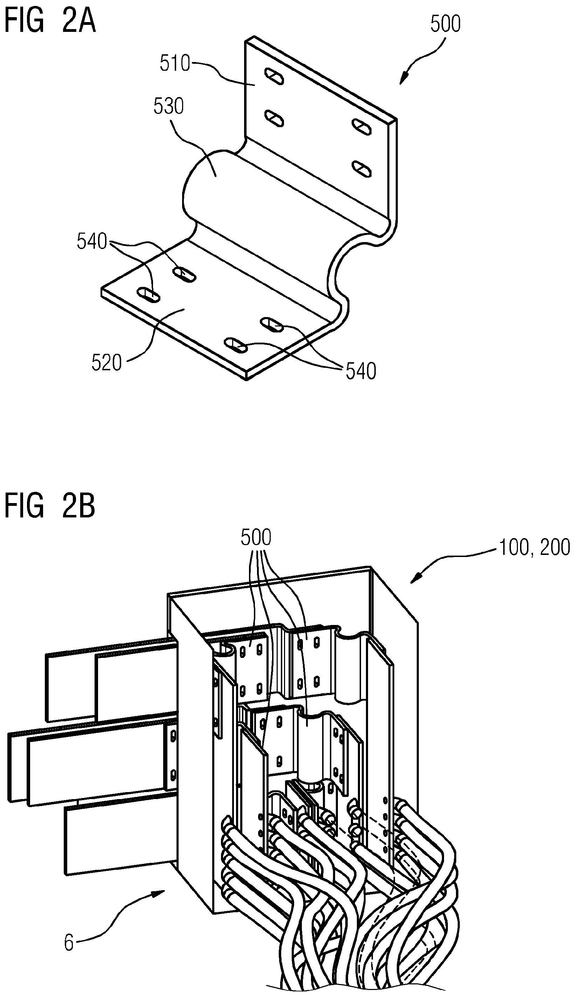

Figure 2A depicts an interconnection element 500 according to an example.

The interconnection element 500 may comprise two sides 510, 520 coupled together by a joint 530. The two sides may form any required angle e.g. 45 degrees, 90 degrees, etc. In the example of Figure 2A both sides are perpendicular thereby enabling a 90-degree connection angle.

Each side 510, 520 may comprise a plurality of coupling holes 540 for securing the interconnection element 500 to e.g. a busbar.

Figure 2B shows a first or a second terminal submodule 100, 200 comprising six interconnection elements 500 (two per phase) which are coupled to an internal connection point e.g. an internal bus bar, and to an external connection point e.g. an external busbar. In the example, the interconnection elements 500 enable the external connection points or busbars to which e.g. a generator is connected, to form 90 degrees with respect to the conductors 6.

The interconnection element 500 may be made of metal or any other electric conductor material or alloy.

Figure 3 further depicts the internal view of an intermediary submodule of the power connection module 1 of Figure 1.

The plurality of conductors 6 within the intermediary section have an end to be coupled to an internal connection point 120A -120C of the first submodule 100 and the other end to the internal connection point 220A -220C of the second submodule 200. The conductors may not be arranged straight, i.e. forming about 0 degrees between both ends. For sake of clarity, in Figure 3 a three-phase A, B, C example is implemented, wherein a conductor for each (electric) phase is represented by a different dashed line, however, any number of conductors per phase may be used.

The intermediary submodule 300 may comprise a central portion 350 that may be about 20-60% of the total length of the intermediary submodule 300.

The plurality of conductors 6 may be configured to conduct a predefined (electric) phase and they may be grouped at least in a first phase group and a second phase group, wherein the phase to be conducted by the conductors in the first phase group being different from the phase of the conductors of the second phase group. The number of phase groups may be proportional to the number of phases. In case the device may be a three-phase device, the conductors may be grouped in a first, a second and a third phase groups.

For the sake of clarity and simplicity, in Figure 3 three conductors 6 (with different dashed lines), i.e. one conductor per electric phase, are shown.

The length of the conductors 6, and thus, of the intermediary submodule 300 may vary e.g. according to the distance between the external power components or may have a prefixed length. In some examples, the length of the plurality of conductors may be about 10 m, 5 m or any other required length.

In some examples, the connection module 1 may comprise two or more interconnected intermediary submodules to avoid manufacturing lengthy intermediary submodules. The connection module may therefore be more flexible as it may be easily adapted to specific cases.

The ends of the plurality of conductors 6 may be connected to the first and second submodules with same electric phase conductors in parallel following a standard scheme, i.e. rows in which adjacent cables belong to same phase group. Besides, in order to avoid electrical problems such as current sharing the conductors may, at least in a cross-section of the central section 350 of the intermediary submodule 300, be arranged in a predetermined matrix form.

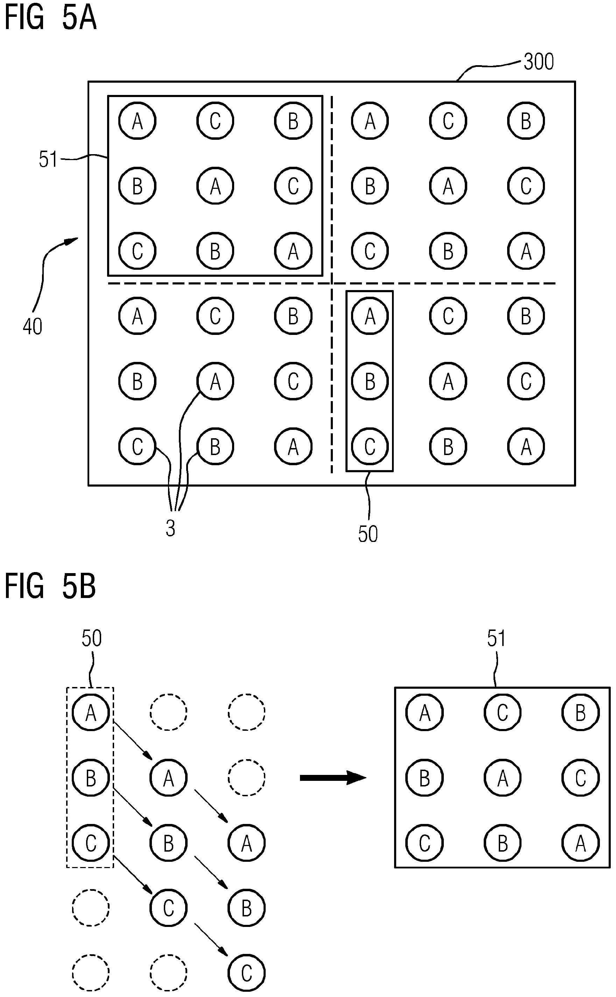

The predetermined matrix cross-section comprises rows and columns. In such predetermined matrix cross-section 40, the conductors 6 are arranged such that in adjacent rows anc /or columns conductors with a different electric phase, i.e. belonging to a different phase group (see Figures 5A and 5B) are arranged.

In some examples, the predetermined matrix cross-section may be continuous along entire or substantial part of the central portion 350 of the intermediary submodule. That is, the arrangement of the conductors may hold the position at least in part of the central portion 350. In other examples, the predetermined matrix cross-section may be repeated a plurality of times i.e. more than two times, at different parts, i.e. in different cross-sections, along the intermediary submodule 300. In those examples, the conductors may be twisted various times thereby forming the predetermined matrix cross-section two or more times along central portion 350 of the intermediary submodule. Thus, the conductors within the intermediary submodule may, in some portions or areas, be straight. Due to the separation or empty space existing between the conductors a cooling effect may be obtained. Besides, in other portions, i.e. the central portion, the conductors may be twisted to form the predetermined matrix cross-section to avoid or at least minimize uneven current sharing i.e. to maximize the current conducted by each conductor.

Figure 4A schematically shows an (standard) arrangement of a plurality of internal connection points or busbars 120A-120C, 120A'-120C' of a first and/or second submodule 100, 200 according to an example. In the figure, a three-phase submodule having twelve conductors per electric phase (arranged in two respective separate busbars) is shown. The conductors 6 in same row may have or may be configured to transmit the same phase.

Figure 4B depicts a submodule 200 comprising a plurality of conductors 30 coupled to the interal connection points (busbars) 120A-120C, 120A'-120C' according to the arrangement of Figure 4A.

Figure 5A depicts a matrix cross-section 40 in the central portion of an intermediary submodule 300 of a three-phase connection module comprising twelve conductors per electric phase. The matrix cross-section of the example of Figure 5A comprises six rows and six columns wherein the conductors in adjacent rows and columns have or are configured to conduct different phases.

In an example, the matrix cross-section may comprise a basic pattern 50 that may be repeated thereby forming a predetermined matrix cross-section 40. The basic pattern 50 may be a predetermined arrangement of conductors configured to avoid positioning conductors conduct the same phase in adjacent rows and/or columns.

The basic pattern 50 may shifted by one row in adjacent columns thereby creating a repetition pattern 51.

Figure 5B depicts a shifting of a basic pattern 50 thereby creating a repetition pattern 51 in a three-phase example.

## Claims

1. A power connection module for electrically coupling together two separate components, the power connection module (1) comprising:
a first and a second submodules, each first and second submodules comprising a plurality of internal connection points and a plurality of external connection points, wherein the connection points are arranged according to a predefined standard scheme,
wherein the plurality of external connection points enable the connection between the power connection module and the two separate components;
an intermediary submodule arranged between the first and second submodules, the intermediary submodule comprising a central portion;
a plurality of conductors arranged at the intermediary submodule and coupling the internal connection points of the first submodule to the internal connection points of the second submodule, wherein the plurality of conductors are grouped in at least a first phase group and a second phase group, wherein the electric phase to be conducted by the conductors in the first phase group is different from the current electric phase to be conducted by the conductors of the second phase group; and wherein
at least in a cross-section of the intermediary submodule, the plurality of conductors form a predetermined matrix cross-section different from the predefined standard scheme, the predetermined matrix cross-section comprising rows and columns, and wherein the conductors arranged in adjacent rows and/or columns of such matrix cross-section belong to a different phase group.

2. The power connection module according to claim 1, wherein matrix cross-section comprises a basic pattern configured to be repeated to form the predetermined matrix cross-section.

3. The power connection module according to claim 2, wherein the base pattern is shifted by one row in adjacent columns of the matrix cross-section.

4. The power connection module according to any of claims 1 - 3, wherein the intermediary submodule comprises a housing.

5. The power connection module according to claim 4, wherein the housing is made of conducting material.

6. The power connection module according to claim 4, wherein the housing is made of non-conducting material and comprises a conducting mesh.

7. The power connection module according to any of claims 1 - 6, further comprising an interconnection element configured to enable an angled connection between the plurality of conductors and an external power component.

8. The power connection module according to claim 7, wherein the interconnection element comprises two sides coupled together through a joint.

9. The power connection module according to claim 7 or 8, wherein the interconnection element comprises a plurality of coupling holes.

10. The power connection module according to any of claims 1 - 9, comprising two or more interconnected intermediary submodules.

11. The power connection module according to any of claims 1 - 10, wherein the predefined scheme comprises rows in which adjacent conductors belong to the same phase group.

12. The power connection module according to any of claims 1 - 11, wherein the conductors are twisted to form the predetermined matrix cross-section.

13. The power connection module according to any of claims 1 - 12, wherein the conductors are cables.

14. A power connection system comprising at least two interconnected power connection modules (1) according to any of the preceding claims.

15. A wind turbine comprising a power connection module according to any of claims 1 - 13.

## Patentansprüche

1. Leistungsverbindungsmodul zum elektrischen Zusammenkoppeln zweier separater Komponenten, wobei das Leistungsverbindungsmodul (1) Folgendes umfasst:
ein erstes und ein zweites Teilmodul, wobei jedes erste und zweite Teilmodul eine Vielzahl interner Verbindungspunkte und eine Vielzahl externer Verbindungspunkte umfasst, wobei die Verbindungspunkte gemäß einem vordefinierten Standardschema angeordnet sind,
wobei die Vielzahl externer Verbindungspunkte die Verbindung zwischen dem Leistungsverbindungsmodul und den zwei separaten Komponenten ermöglicht;
ein Zwischenteilmodul, das zwischen dem ersten und dem zweiten Teilmodul angeordnet ist, wobei das Zwischenteilmodul ein zentrales Teilstück umfasst;
eine Vielzahl von Leitern, die an dem Zwischenteilmodul angeordnet ist und die internen Verbindungspunkte des ersten Teilmoduls mit den internen Verbindungspunkten des zweiten Teilmoduls koppelt, wobei die Vielzahl von Leitern in mindestens einer ersten Phasengruppe und einer zweiten Phasengruppe gruppiert ist, wobei sich die elektrische Phase, die durch die Leiter in der ersten Phasengruppe zu leiten ist, von der elektrischen Stromphase unterscheidet, die durch die Leiter der zweiten Phasengruppe zu leiten ist; und wobei
mindestens in einem Querabschnitt des Zwischenteilmoduls die Vielzahl von Leitern einen vorbestimmten Matrixquerabschnitt bildet, der sich von dem vordefinierten Standardschema unterscheidet, wobei der vorbestimmte Matrixquerabschnitt Zeilen und Spalten umfasst und wobei die Leiter, die in benachbarten Zeilen und/oder Spalten eines solchen Matrixquerabschnitts angeordnet sind, zu einer unterschiedlichen Phasengruppe gehören.

2. Leistungsverbindungsmodul nach Anspruch 1, wobei der Matrixquerabschnitt ein Basismuster umfasst, das dazu konfiguriert ist, wiederholt zu werden, um den vorbestimmten Matrixquerabschnitt zu bilden.

3. Leistungsverbindungsmodul nach Anspruch 2, wobei das Basismuster um eine Zeile in benachbarten Spalten des Matrixquerabschnitts verschoben ist.

4. Leistungsverbindungsmodul nach einem der Ansprüche 1-3, wobei das Zwischenteilmodul ein Gehäuse umfasst.

5. Leistungsverbindungsmodul nach Anspruch 4, wobei das Gehäuse aus einem leitenden Material hergestellt ist.

6. Leistungsverbindungsmodul nach Anspruch 4, wobei das Gehäuse aus einem nicht leitenden Material hergestellt ist und ein leitendes Netz umfasst.

7. Leistungsverbindungsmodul nach einem der Ansprüche 1-6, ferner umfassend ein Verbindungselement, das dazu konfiguriert ist, eine abgewinkelte Verbindung zwischen der Vielzahl von Leitern und einer externen Leistungskomponente zu ermöglichen.

8. Leistungsverbindungsmodul nach Anspruch 7, wobei das Verbindungselement zwei Seiten umfasst, die über ein Gelenk zusammengekoppelt sind.

9. Leistungsverbindungsmodul nach Anspruch 7 oder 8, wobei das Verbindungselement eine Vielzahl von Kopplungslöchern umfasst.

10. Leistungsverbindungsmodul nach einem der Ansprüche 1-9, umfassend zwei oder mehrere miteinander verbundene Zwischenteilmodule.

11. Leistungsverbindungsmodul nach einem der Ansprüche 1-10, wobei das vordefinierte Schema Zeilen umfasst, in denen benachbarte Leiter zu derselben Phasengruppe gehören.

12. Leistungsverbindungsmodul nach einem der Ansprüche 1-11, wobei die Leiter verdrillt sind, um den vorbestimmten Matrixquerabschnitt zu bilden.

13. Leistungsverbindungsmodul nach einem der Ansprüche 1-12, wobei die Leiter Kabel sind.

14. Leistungsverbindungssystem, umfassend mindestens zwei miteinander verbundene Leistungsverbindungsmodule (1) nach einem der vorhergehenden Ansprüche.

15. Windturbine, umfassend ein Leistungsverbindungsmodul nach einem der Ansprüche 1-13.

## Revendications

1. Module de connexion électrique pour coupler électriquement ensemble deux composants séparés, le module de connexion électrique (1) comprenant :
des premier et deuxième sous-modules, chacun des premier et deuxième sous-modules comprenant une pluralité de points de connexion internes et une pluralité de points de connexion externes, dans lequel les points de connexion sont agencés selon un schéma standard prédéfini,
dans lequel la pluralité de points de connexion externes permettent la connexion entre le module de connexion électrique et les deux composants séparés ;
un sous-module intermédiaire agencé entre les premier et deuxième sous-modules, le sous-module intermédiaire comprenant une partie centrale ;
une pluralité de conducteurs agencés au niveau du sous-module intermédiaire et couplant les points de connexion internes du premier sous-module aux points de connexion internes du deuxième sous-module, dans lequel la pluralité de conducteurs sont groupés en au moins un premier groupe de phases et un deuxième groupe de phases, dans lequel la phase électrique devant être conduite par les conducteurs dans le premier groupe de phases est différente de la phase de courant électrique devant être conduite par les conducteurs du deuxième groupe de phases ; et dans lequel
au moins dans une section transversale du sous-module intermédiaire, la pluralité de conducteurs forment une section transversale matricielle prédéterminée différente du schéma standard prédéfini,
la section transversale matricielle prédéterminée comprenant des rangées et des colonnes, et dans lequel les conducteurs agencés dans des rangées et/ou colonnes adjacentes d'une telle section transversale matricielle appartiennent à un groupe de phases différent.

2. Module de connexion électrique selon la revendication 1, dans lequel la section transversale matricielle comprend un motif de base configuré pour être répété pour former la section transversale matricielle prédéterminée.

3. Module de connexion électrique selon la revendication 2, dans lequel le motif de base est décalé d'une rangée dans des colonnes adjacentes de la section transversale matricielle.

4. Module de connexion électrique selon l'une quelconque des revendications 1 à 3, dans lequel le sous-module intermédiaire comprend un boîtier.

5. Module de connexion électrique selon la revendication 4, dans lequel le boîtier est constitué d'un matériau conducteur.

6. Module de connexion électrique selon la revendication 4, dans lequel le boîtier est constitué d'un matériau non conducteur et comprend un treillis conducteur.

7. Module de connexion électrique selon l'une quelconque des revendications 1 à 6, comprenant en outre un élément d'interconnexion configuré pour permettre une connexion coudée entre la pluralité de conducteurs et un composant de puissance externe.

8. Module de connexion électrique selon la revendication 7, dans lequel l'élément d'interconnexion comprend deux côtés couplés ensemble par l'intermédiaire d'une articulation.

9. Module de connexion électrique selon la revendication 7 ou 8, dans lequel l'élément d'interconnexion comprend une pluralité de trous de couplage.

10. Module de connexion électrique selon l'une quelconque des revendications 1 à 9, comprenant deux sous-modules intermédiaires reliés entre eux ou plus.

11. Module de connexion électrique selon l'une quelconque des revendications 1 à 10, dans lequel le schéma prédéfini comprend des rangées dans lesquelles des conducteurs adjacents appartiennent au même groupe de phases.

12. Module de connexion électrique selon l'une quelconque des revendications 1 à 11, dans lequel les conducteurs sont torsadés pour former la section transversale matricielle prédéterminée.

13. Module de connexion électrique selon l'une quelconque des revendications 1 à 12, dans lequel les conducteurs sont des câbles.

14. Système de connexion électrique comprenant au moins deux modules de connexion électrique (1) reliés entre eux selon l'une quelconque des revendications précédentes.

15. Éolienne comprenant un module de connexion électrique selon l'une quelconque des revendications 1 à 13.
